# EUROPÄISCHE PATENTSCHRIFT

(11) **EP 3 560 084 B1**
(45) Veröffentlichungstag und Bekanntmachung des Hinweises auf die Patenterteilung: **26.08.2020**
(21) Anmeldenummer: 17816462.0
(22) Anmeldetag: 20.11.2017
(51) Int. Cl.: H02K 15/03, H02K 1/22

(54) **HERSTELLUNGSVERFAHREN UND DEMONTAGEVERFAHREN FÜR EINE ROTATORISCHE PERMANENTERREGTE ELEKTRISCHE MASCHINE**
PRODUCTION METHOD AND DISASSEMBLY METHOD FOR A ROTARY PERMANENTLY EXCITED ELECTRICAL MACHINE
PROCÉDÉ DE FABRICATION ET DE DÉMONTAGE D'UNE MACHINE ÉLECTRIQUE TOURNANTE À AIMANT PERMANENT

(30) Priorität: 31.01.2017 EP 17153953
(43) Veröffentlichungstag der Anmeldung: 30.10.2019
(73) Patentinhaber: Siemens Aktiengesellschaft, 80333 München (DE)
(72) Erfinder: BRAUN, Jochen, 94032 Passau (DE)
(86) Internationale Anmeldenummer: PCT/EP2017/079746
(87) Internationale Veröffentlichungsnummer: WO 2018/141431

(56) Entgegenhaltungen:
- WO-A1-2015/183379
- DE-A1- 10 049 766
- DE-A1-102007 025 971
- DE-A1-102013 205 928
- JP-A- S59 178 942
- US-B1- 9 508 479

## Beschreibung

Die vorliegende Erfindung geht aus von einem Herstellungsverfahren für eine rotatorische permanenterregte elektrische Maschine,
- wobei ein Stator der elektrischen Maschine hergestellt wird,
- wobei ein Rotorkörper eines Rotors der elektrischen Maschine hergestellt wird,
- wobei in dem oder an dem Rotorkörper aus magnetisierbarem, aber noch nicht magnetisiertem Material bestehende Magnetkörper positioniert und fixiert werden, so dass die Magnetkörper im Bereich noch zu bildender Pole des Rotors angeordnet sind,
- wobei um die noch zu bildenden Pole des Rotors herum elektrische Leiter angeordnet werden,
- wobei der Rotorkörper auf einer Rotorwelle befestigt wird,
- wobei die Rotorwelle einschließlich des Rotorkörpers mit den noch nicht magnetisierten Magnetkörpern und den elektrischen Leitern relativ zum Stator in ihrer späteren Betriebsstellung gelagert wird,
- wobei nach dem Lagern der Rotorwelle relativ zum Stator in ihrer späteren Betriebsstellung die elektrischen Leiter mit einem Impulsstrom beaufschlagt werden und dadurch durch Magnetisierung der Magnetkörper die Pole des Rotors gebildet werden.

Die vorliegende Erfindung geht weiterhin aus von einem Demontageverfahren für eine rotatorische permanenterregte elektrische Maschine,
- wobei die elektrische Maschine einen Rotor mit einem Rotorkörper und einen Stator aufweist,
- wobei in dem oder an dem Rotorkörper aus magnetisiertem Material bestehende Magnetkörper positioniert und fixiert sind, so dass die Magnetkörper im Bereich der Pole des Rotors angeordnet sind,
- wobei um die Pole des Rotors herum elektrische Leiter angeordnet sind,
- wobei der Rotorkörper auf einer Rotorwelle befestigt ist,
- wobei zunächst die elektrischen Leiter mit einem Impulsstrom beaufschlagt werden und dadurch die Magnetkörper entmagnetisiert werden,
- wobei erst danach die Rotorwelle einschließlich des Rotorkörpers mit den nunmehr nicht mehr magnetisierten Magnetkörpern und den elektrischen Leitern relativ zum Stator aus ihrer Betriebsstellung entfernt wird.

Bei permanenterregten elektrischen Maschinen wird die elektromagnetische Kraft durch das Zusammenwirken der magnetischen Felder bewirkt, die durch eine im Stator der elektrischen Maschine angeordnete Statorwicklung einerseits und durch auf oder im Rotorkörper des Rotors der elektrischen Maschine angeordnete Permanentmagnete andererseits generiert werden.

Permanentmagnete üben auf ferromagnetische Materialien wie beispielsweise die Bleche des Rotorkörpers oder des Stators große Kräfte aus. Die genaue Positionierung der Magnete auf oder in dem Rotorkörper ist daher schwierig. Oftmals werden spezielle Vorrichtungen benötigt, welche die hierfür erforderlichen Kräfte ausüben können. Ohne derartige Vorrichtungen können die Rotorkörper großer permanenterregter elektrischer Maschinen aus sicherheitstechnischen Gründen oftmals nicht bestückt werden.

Auch nach dem Bestücken des Rotorkörpers ist die weitergehende Montage der elektrischen Maschine, insbesondere beispielsweise bei einem üblichen Innenläufer das Einführen des mit den Magnetkörpern bestückten Rotorkörpers in den Stator der elektrischen Maschine, schwierig. Auch hierfür werden oftmals wieder teure und aufwendige Vorrichtungen benötigt, um die hierbei auftretenden Kräfte beherrschen zu können. Insbesondere muss bei der Montage ein Kontakt der Permanentmagnete mit dem Blechpaket des Stators zuverlässig vermieden werden. Anderenfalls würde der Rotor aufgrund der hohen magnetischen Kräfte am Stator anhaften und wäre nur schwer wieder vom Stator zu trennen.

Es wurde bereits vorgeschlagen, den Rotor in den Stator einzufahren (d.h. den Rotor in Axialrichtung in den Stator einzuführen), während der Rotorkörper noch nicht mit den Magnetkörpern bestückt ist. In diesem Fall werden die Magnetkörper zu einem späteren Zeitpunkt mittels entsprechender Einführvorrichtungen in den Rotorkörper eingeführt. Diese Vorgehensweise ist umständlich und kostspielig. Darüber hinaus ist sie nur bei sogenannten vergrabenen Permanentmagneten realisierbar, wenn die Magnetkörper also in Taschen des Rotorkörpers eingeführt werden. Hingegen ist diese Vorgehensweise nicht realisierbar, wenn die Magnetkörper außen auf der Mantelfläche des Rotorkörpers angeordnet werden.

Für die Demontage des Rotors einer permanenterregten elektrischen Maschine stellen sich die gleichen Probleme. Insbesondere kann der Rotor nur mittels einer speziellen Vorrichtung, welche die hohen magnetischen Anziehungskräfte überwinden kann, in Axialrichtung aus dem Stator ausgezogen werden. Alternativ ist es möglich, die komplette elektrische Maschine hinreichend lang auf eine Temperatur oberhalb der Curietemperatur der Magnetkörper zu erhitzen, dadurch die Magnete zu entmagnetisieren und den Rotor nach der Entmagnetisierung der Magnetkörper aus dem Stator herauszufahren.

Ein Herstellungsverfahren und ein Demontageverfahren der eingangs genannten Art sind beispielsweise aus der US 9 508 479 B1 bekannt. Ähnlich gelagerte Offenbarungsgehalte sind der DE 100 49 766 A1 und der DE 10 2007 025 971 A1 zu entnehmen.

Eine erste Aufgabe der vorliegenden Erfindung besteht darin, eine Möglichkeit zu schaffen, mittels derer die elektrische Maschine auf einfache Weise hergestellt und insbesondere montiert werden kann und die Pole des Rotors im Betrieb zuverlässig geschützt sind.

Die erste Aufgabe wird durch ein Herstellungsverfahren mit den Merkmalen des Anspruchs 1 gelöst. Vorteilhafte Ausgestaltungen des Herstellungsverfahrens sind Gegenstand der abhängigen Ansprüche 2 und 3.

Erfindungsgemäß wird ein Herstellungsverfahren der eingangs genannten Art dadurch ausgestaltet, dass die Enden des Leiters bzw. der Leiter nach dem Bilden der Pole des Rotors elektrisch miteinander verbunden werden. Dadurch kann erreicht werden, dass im normalen Betrieb der elektrischen Maschine die Leiter eine Schutzfunktion für die Magnetkörper ausüben.

Es ist möglich, dass um jeden zu bildenden Pol herum jeweils ein eigener Leiter angeordnet wird. Alternativ ist es möglich, dass um die zu bildenden Pole herum ein durchgehender Leiter angeordnet wird.

Eine zweite Aufgabe der vorliegenden Erfindung besteht darin, eine Möglichkeit zu schaffen, mittels derer eine derartige elektrische Maschine auf einfache Weise demontiert werden kann und die Pole des Rotors im Betrieb zuverlässig geschützt sind.

Die zweite Aufgabe wird durch ein Demontageverfahren mit den Merkmalen des Anspruchs 4 gelöst.

Erfindungsgemäß wird ein Demontageverfahren der eingangs genannten Art dadurch ausgestaltet, die Enden des Leiters bzw. der Leiter elektrisch miteinander verbunden sind und vor dem Beaufschlagen mit dem Impulsstrom elektrisch voneinander getrennt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine in einem Längsschnitt längs einer Linie I-I in FIG 2,
- FIG 2: die elektrische Maschine von FIG 1 im Querschnitt längs einer Linie II-II in FIG 1 und
- FIG 3: den Mantel eines Rotorkörpers in abgerollter Darstellung.

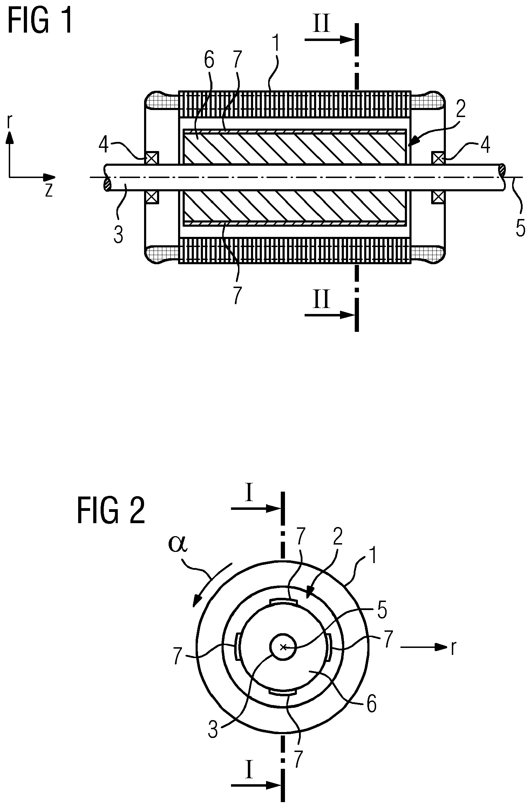

Gemäß den FIG 1 und 2 weist eine elektrische Maschine einen Stator 1 und einen Rotor 2 auf. Der Rotor 2 ist auf einer Rotorwelle 3 drehfest angeordnet. In ihrer Betriebsstellung ist die Rotorwelle 3 in Lagern 4 gelagert. Die Lager 4 sind bezüglich des Stators 1 ortsfest. Beispielsweise können die Lager 4 in sogenannten Lagerschilden angeordnet sein, die ihrerseits an einem den Stator 1 umgebenden Gehäuse befestigt sind. Aufgrund der Lagerung der Rotorwelle 3 in den Lagern 4 sind die Rotorwelle 3 und mit ihr der Rotor 2 um eine Rotationsachse 5 der elektrischen Maschine rotierbar. Die elektrische Maschine ist somit eine rotatorische elektrische Maschine.

Soweit nachfolgend die Begriffe "axial", "radial" und "tangential" verwendet werden, sind sie stets auf die Rotationsachse 5 bezogen. "Axial" ist eine Richtung parallel zur Rotationsachse 5. "Radial" ist eine Richtung orthogonal zur Rotationsachse 5 auf die Rotationsachse 5 zu oder von ihr weg. "Tangential" ist eine Richtung, die sowohl orthogonal zur Axialrichtung als auch orthogonal zur Radialrichtung ist. "Tangential" ist also eine Richtung, die bei konstanter Axialposition und in konstantem radialem Abstand von der Rotationsachse 5 kreisförmig um die Rotationsachse 5 herum gerichtet ist. Weiterhin werden nachfolgend die Axialrichtung mit dem Bezugszeichen z, die Radialrichtung mit dem Bezugszeichen r und die Tangentialrichtung - also der mechanische Winkel - mit dem Bezugszeichen α versehen.

Der Rotor 2 umfasst gemäß den FIG 1 und 2 einen Rotorkörper 6. Der Rotorkörper 6 umfasst insbesondere ein Blechpaket. Der Rotorkörper 6 ist dasjenige Teil, das drehfest mit der Rotorwelle 3 verbunden ist. Der Rotor 2 umfasst weiterhin eine Anzahl an Polen 7. Die Pole 7 sind auf dem Rotorkörper 6 angeordnet. Die Anzahl an Polen 7 kann nach Bedarf sein. Nachfolgend wird ein Ausführungsbeispiel erläutert, bei dem die Anzahl an Polen 7 vier beträgt. Die Anzahl an Polen 7 könnte jedoch auch kleiner oder größer sein. Die Pole 7 werden entsprechend der Darstellung in FIG 2 durch Permanentmagnete gebildet. Die elektrische Maschine ist somit eine permanenterregte elektrische Maschine.

Zum Herstellen der elektrischen Maschine wird zum einen der Stator 1 der elektrischen Maschine hergestellt. Dieser Vorgang ist Fachleuten allgemein bekannt und kann auch im Rahmen der vorliegenden Erfindung in völlig konventioneller Weise erfolgen. Er wird daher nachstehend nicht näher erläutert. Die Herstellung des Stators 1 kann zu einem beliebigen Zeitpunkt erfolgen. Sie muss lediglich abgeschlossen sein, wenn später die Rotorwelle 3 in den Lagern 4 gelagert wird. Erfindungsgemäß ausgestaltet sind hingegen die Details der Herstellung des Rotors 2 in Verbindung mit der Vereinigung von Stator 1 und Rotor 2.

Zum Herstellen des Rotors 2 wird zunächst der Rotorkörper 6 hergestellt. Der Rotorkörper 6 bildet das sogenannte Aktivteil des Rotors 2, also den Stapel von Elektroblechen einschließlich der zugehörigen Befestigungselemente, mittels derer der Stapel von Elektroblechen zusammengedrückt und zusammengehalten wird. Auch das Herstellen des Rotorkörpers 6 kann in völlig konventioneller Weise erfolgen. Es wird daher nachstehend nicht näher erläutert. Entscheidend ist im Rahmen der vorliegenden Erfindung jedoch, dass der Rotorkörper 6 nicht die Pole 7 mit umfasst.

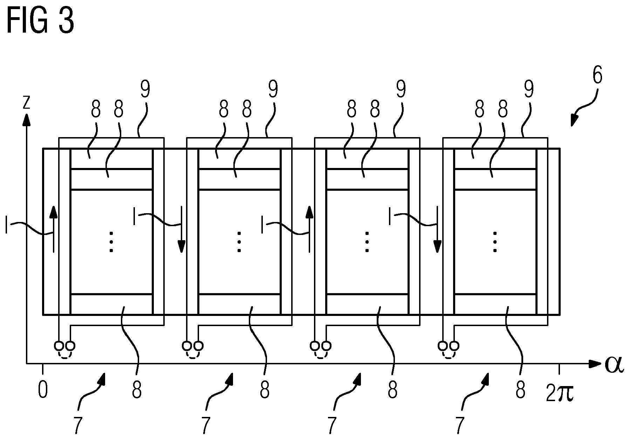

Nach dem Herstellen des Rotorkörpers 6 werden an dem Rotorkörper 6 Magnetkörper 8 positioniert und fixiert. FIG 3 zeigt diesen Zustand. Das Positionieren und das Fixieren der Magnetkörper 8 können als solches in konventioneller Weise erfolgen. Insbesondere erfolgen das Positionieren und Fixieren derart, dass die Magnetkörper 8 im Bereich der Pole 7 des Rotors 2 angeordnet sind. Entscheidend ist im Rahmen der vorliegenden Erfindung jedoch, dass die Magnetkörper 8 zwar aus magnetisierbarem Material bestehen, das Material aber noch nicht magnetisiert ist. Zum Zeitpunkt des Positionierens und Fixierens der Magnetkörper 8 am oder im Rotorkörper 7 wirken daher keine magnetischen Kräfte. Insbesondere das Positionieren der Magnetkörper 8 auf dem Rotorkörper 6 ist daher erheblich einfacher realisierbar, als wenn die Magnetkörper 8 bereits magnetisiert wären. Insbesondere ist es möglich, die Magnetkörper 8 hochgenau zu positionieren, weil die Magnetkörper 8 keine magnetische Kräfte aufeinander und den Rotorkörper 6 ausüben. Die Fixierung der Magnetkörper 8 kann nach Bedarf realisiert werden, beispielsweise durch Kleben oder durch Vergießen. Auch das Aufbringen einer Bandage ist möglich.

Durch die Positionierung und Fixierung sind die Magnetkörper 8 zwar im Bereich der Pole 7 des Rotors 2 angeordnet. Aufgrund des Umstands, dass die Magnetkörper 8 noch nicht magnetisiert sind, sind die Pole 7 jedoch noch nicht gebildet.

Im Rahmen der Darstellung von FIG 3 werden die Magnetkörper 8 am Rotorkörper 6 angeordnet. Die prinzipiell gleichen Vorgehensweisen sind auch möglich, wenn die Magnetkörper 8 nicht am Rotorkörper 6, sondern im Rotorkörper 6 angeordnet werden, also an der Mantelfläche des Rotorkörpers 6 durch Material des Rotorkörpers 6 verdeckt sind.

In einem nachfolgenden Schritt werden entsprechend der Darstellung in FIG 3 um die noch zu bildenden Pole 7 des Rotors 2 herum elektrische Leiter 9 angeordnet. Die elektrischen Leiter 9 werden ebenfalls fixiert. Die elektrischen Leiter 9 umgeben in einer Axial-Tangential-Ebene gesehen die Pole 7 in der Regel mindestens U-förmig. Alternativ können die elektrischen Leiter 9 die Pole 7 auch mit einer vollständigen Windung oder mehreren vollständigen Windungen umgeben. In Radialrichtung r gesehen können die Leiter 9 auf der gleichen Höhe wie die Magnetkörper 8, oberhalb der Magnetkörper 8 oder unterhalb der Magnetkörper 8 angeordnet sein. Es ist entsprechend der Darstellung in FIG 3 möglich, dass um jeden Pol 7 herum jeweils ein eigener elektrischer Leiter 9 gelegt wird. In diesem Fall sind pro Pol 7 je zwei Leiterenden 10 vorhanden. Alternativ ist es möglich, dass um die Pole 7 herum nur ein einziger durchgehender Leiter 9 gelegt wird. In diesem Fall sind insgesamt nur zwei Leiterenden 10 vorhanden. Auch Zwischenstufen, dass also ein Leiter 9 zwar um mehrere, aber nicht um alle Pole 7 gelegt wird, sind möglich.

In einem weiteren Schritt wird der Rotorkörper 6 auf der Rotorwelle 3 drehfest befestigt. Das Befestigen auf der Rotorwelle 3 erfolgt auf konventionelle Weise und wird daher nachstehend nicht näher erläutert. Es kann alternativ vor oder nach dem Positionieren und Fixieren der Magnetkörper 8 auf dem Rotorkörper 6 erfolgen.

Nachdem der Rotorkörper 6 mit den auf dem Rotorkörper 6 angeordneten Magnetkörpern 8 auf der Rotorwelle 3 drehfest befestigt ist, wird die Rotorwelle 3 einschließlich des Rotorkörpers 6 mit den Magnetkörpern 8 und den elektrischen Leitern 9 relativ zum Stator 1 in ihrer späteren Betriebsstellung gelagert. Die elektrische Maschine befindet sich somit im Prinzip in dem in den FIG 1 und 2 gezeigten Zustand. Die Magnetkörper 8 sind zu diesem Zeitpunkt jedoch immer noch nicht magnetisiert. Der Rotor 2 ist in diesem Zustand daher - ebenso wie im späteren Betrieb, in dem der Rotor 2 und der Stator 1 elektromagnetisch zusammenwirken - um die Rotationsachse 5 rotierbar. Aufgrund des Umstands, dass die Magnetkörper 8 noch nicht magnetisiert sind und demzufolge die Pole 7 noch nicht gebildet sind, wirken zwischen dem Stator 1 und dem Rotor 2 jedoch keine elektromagnetischen Kräfte. Dies gilt auch dann, wenn eine im Stator 1 angeordnete Statorwicklung mit Strom beaufschlagt wird.

Erst jetzt, also nach dem Lagern der Rotorwelle 3 relativ zum Stator 1 in ihrer Betriebsstellung und damit im wesentlichen nach der vollständigen mechanischen Montage der elektrischen Maschine, werden die Pole 7 des Rotors 2 gebildet. Zu diesem Zweck werden die elektrischen Leiter 9 - je nach Ausgestaltung einzeln nacheinander oder simultan - mit einem Impulsstrom I beaufschlagt. Der Impulsstrom I bewirkt in dem von dem Leiter 9 bzw. den Leitern 9 umschlossenen Bereich - d.h. im wesentlichen im Bereich der zu bildenden Pole 7 - kurzzeitig ein hohes magnetisches Feld. Der Impulsstrom I ist derart bestimmt, dass das durch den Impulsstrom I im Bereich der Pole 7 generierte magnetische Feld die Koerzitivfeldstärke der Magnetkörper 8 übersteigt. Der Impulsstrom I bewirkt somit die Magnetisierung der Magnetkörper 8 und hiermit korrespondierend die Bildung der Pole 7 des Rotors 2.

Es ist möglich, die Enden 10 des Leiters 9 bzw. der Leiter 9 nach dem Bilden der Pole 7 des Rotors 2 elektrisch miteinander zu verbinden. Dies ist in FIG 3 schematisch durch entsprechende gestrichelte Linien angedeutet.

Zum Demontieren einer auf eine derartige Weise hergestellten rotatorischen permanenterregten elektrischen Maschine kann die inverse Vorgehensweise ergriffen werden. Insbesondere werden in diesem Fall zunächst die elektrischen Leiter 9 mit einem Impulsstrom I beaufschlagt und dadurch die Magnetkörper 8 entmagnetisiert. Soweit erforderlich, werden vor dem Beaufschlagen mit dem Impulsstrom I die Enden 10 des Leiters 9 bzw. der Leiter 9 elektrisch voneinander getrennt. Erst danach, d.h. nach dem Entmagnetisieren der Rotorkörper 8, wird die Rotorwelle 3 einschließlich des Rotorkörpers 7 mit den nunmehr nicht mehr magnetisierten Magnetkörpern 8 und den elektrischen Leitern 9 relativ zum Stator 1 aus ihrer Betriebsstellung entfernt.

Zusammengefasst betrifft die vorliegende Erfindung somit folgenden Sachverhalt:
Zum Herstellen einer rotatorischen permanenterregten elektrischen Maschine werden ein Stator 1 und ein Rotorkörper 6 eines Rotors 2 der elektrischen Maschine hergestellt. In dem oder an dem Rotorkörper 6 werden aus magnetisierbarem, aber noch nicht magnetisiertem Material bestehende Magnetkörper 8 positioniert und fixiert, so dass die Magnetkörper 8 im Bereich noch zu bildender Pole 7 des Rotors 2 angeordnet sind. Um die noch zu bildenden Pole 7 des Rotors 2 herum werden elektrische Leiter 9 angeordnet. Der Rotorkörper 6 wird auf einer Rotorwelle 3 befestigt. Die Rotorwelle 3 einschließlich des Rotorkörpers 6 mit den noch nicht magnetisierten Magnetkörpern 8 und den elektrischen Leitern 9 wird relativ zum Stator 1 in ihrer späteren Betriebsstellung gelagert. Nach dem Lagern der Rotorwelle 3 relativ zum Stator 1 werden die elektrischen Leiter 9 mit einem Impulsstrom I beaufschlagt und dadurch durch Magnetisierung der Magnetkörper 8 die Pole 7 des Rotors 2 gebildet. Die Enden 10 des Leiters 9 bzw. der Leiter 9 werden nach dem Bilden der Pole 7 des Rotors 2 elektrisch miteinander verbunden. Zur Demontage der elektrischen Maschine wird die inverse Vorgehensweise ergriffen.

Die vorliegende Erfindung weist viele Vorteile auf. Insbesondere ist es auf einfache Weise möglich, die elektrische Maschine herzustellen und zu montieren und auch wieder zu demontieren, ohne dass während der Montage und der Demontage der elektrischen Maschine magnetische Kräfte auftreten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Herstellungsverfahren für eine rotatorische permanenterregte elektrische Maschine,
- wobei ein Stator (1) der elektrischen Maschine hergestellt wird,
- wobei ein Rotorkörper (6) eines Rotors (2) der elektrischen Maschine hergestellt wird,
- wobei in dem oder an dem Rotorkörper (6) aus magnetisierbarem, aber noch nicht magnetisiertem Material bestehende Magnetkörper (8) positioniert und fixiert werden, so dass die Magnetkörper (8) im Bereich noch zu bildender Pole (7) des Rotors (2) angeordnet sind,
- wobei um die noch zu bildenden Pole (7) des Rotors (2) herum elektrische Leiter (9) angeordnet werden,
- wobei der Rotorkörper (6) auf einer Rotorwelle (3) befestigt wird,
- wobei die Rotorwelle (3) einschließlich des Rotorkörpers (6) mit den noch nicht magnetisierten Magnetkörpern (8) und den elektrischen Leitern (9) relativ zum Stator (1) in ihrer späteren Betriebsstellung gelagert wird,
- wobei nach dem Lagern der Rotorwelle (3) relativ zum Stator (1) in ihrer späteren Betriebsstellung die elektrischen Leiter (9) mit einem Impulsstrom (I) beaufschlagt werden und dadurch durch Magnetisierung der Magnetkörper (8) die Pole (7) des Rotors (2) gebildet werden,
**dadurch gekennzeichnet, dass** die Enden (10) des Leiters (9) bzw. der Leiter (9) nach dem Bilden der Pole (7) des Rotors (2) elektrisch miteinander verbunden werden.

2. Herstellungsverfahren nach Anspruch 1, **dadurch gekennzeichnet, dass** um jeden zu bildenden Pol (7) herum jeweils ein eigener Leiter (9) angeordnet wird.

3. Herstellungsverfahren nach Anspruch 1, **dadurch gekennzeichnet, dass** um die zu bildenden Pole (7) herum ein durchgehender Leiter (9) angeordnet wird.

4. Demontageverfahren für eine rotatorische permanenterregte elektrische Maschine,
- wobei die elektrische Maschine einen Rotor (2) mit einem Rotorkörper (6) und einen Stator (1) aufweist,
- wobei in dem oder an dem Rotorkörper (6) aus magnetisiertem Material bestehende Magnetkörper (8) positioniert und fixiert sind, so dass die Magnetkörper (8) im Bereich der Pole (7) des Rotors (2) angeordnet sind,
- wobei um die Pole (7) des Rotors (2) herum elektrische Leiter (9) angeordnet sind,
- wobei der Rotorkörper (6) auf einer Rotorwelle (3) befestigt ist,
- wobei zunächst die elektrischen Leiter (9) mit einem Impulsstrom (I) beaufschlagt werden und dadurch die Magnetkörper (8) entmagnetisiert werden,
- wobei erst danach die Rotorwelle (3) einschließlich des Rotorkörpers (6) mit den nunmehr nicht mehr magnetisierten Magnetkörpern (8) und den elektrischen Leitern (9) relativ zum Stator (1) aus ihrer Betriebsstellung entfernt wird,
**dadurch gekennzeichnet, dass** die Enden (10) des Leiters (9) bzw. der Leiter (9) elektrisch miteinander verbunden sind und vor dem Beaufschlagen mit dem Impulsstrom (I) elektrisch voneinander getrennt werden.

## Claims

1. Production method for a rotary permanently excited electrical machine,
- wherein a stator (1) of the electrical machine is produced,
- wherein a rotor body (6) of a rotor (2) of the electrical machine is produced,
- wherein magnet bodies (8) which are composed of magnetizable, but not yet magnetized, material are positioned and fixed in the or on the rotor body (6), so that the magnet bodies (8) are arranged in the region of poles (7) of the rotor (2) which are yet to be formed,
- wherein electrical conductors (9) are arranged around the poles (7) of the rotor (2) which are yet to be formed,
- wherein the rotor body (6) is fastened on a rotor shaft (3),
- wherein the rotor shaft (3), including the rotor body (6) with the not yet magnetized magnet bodies (8) and the electrical conductors (9), is mounted in its subsequent operating position relative to the stator (1),
- wherein, after the rotor shaft (3) is mounted in its subsequent operating position relative to the stator (1), a pulse current (I) is applied to the electrical conductors (9) and the poles (7) of the rotor (2) are formed in this way owing to magnetization of the magnet bodies (8),
**characterized in that** the ends (10) of the conductor (9) or of the conductors (9) are electrically connected to one another after the poles (7) of the rotor (2) are formed.

2. Production method according to Claim 1, **characterized in that** in each case one dedicated conductor (9) is arranged around each pole (7) which is to be formed.

3. Production method according to Claim 1, **characterized in that** a continuous conductor (9) is arranged around the poles (7) which are to be formed.

4. Disassembly method for a rotary permanently excited electrical machine,
- wherein the electrical machine has a rotor (2) comprising a rotor body (6) and has a stator (1),
- wherein magnet bodies (8) which are composed of magnetized material are positioned and fixed in the or on the rotor body (6), so that the magnet bodies (8) are arranged in the region of the poles (7) of the rotor (2),
- wherein electrical conductors (9) are arranged around the poles (7) of the rotor (2),
- wherein the rotor body (6) is fastened on a rotor shaft (3),
- wherein a pulse current (I) is first applied to the electrical conductors (9) and the magnet bodies (8) are demagnetized in this way,
- wherein the rotor shaft (3), including the rotor body (6) with the now no longer magnetized magnet bodies (8) and the electrical conductors (9), is only then moved out of its operating position relative to the stator (1),
**characterized in that** the ends (10) of the conductor (9) or of the conductors (9) are electrically connected to one another and are electrically isolated from one another before the pulse current (I) is applied.

## Revendications

1. Procédé de fabrication d'une machine électrique tournante à excitation permanente,
- dans lequel on fabrique un stator (1) de la machine électrique,
- dans lequel on fabrique un corps (6) d'un rotor (2) de la machine électrique,
- dans lequel on met en position et immobilise, dans ou sur le corps (6) du rotor, des corps (8) d'aimant en un matériau magnétisable, mais non encore magnétisé, de manière à ce que les corps (8) d'aimant soient dans la région de pôles (7) encore à former du rotor (2),
- dans lequel on met des conducteurs (9) électriques tout autour des pôles (7) encore à former du rotor (2),
- dans lequel on fixe le corps (6) du rotor sur un arbre (3) de rotor,
- dans lequel on met, dans sa position de fonctionnement ultérieure par rapport au stator (1), l'arbre (3) du rotor, incluant le corps (6) du rotor, avec les corps (8) d'aimant non encore magnétisés et les conducteurs (9) électriques,
- dans lequel, après avoir mis l'arbre (3) du rotor par rapport au stator (1) dans sa position de fonctionnement ultérieure, on envoie aux conducteurs (9) électriques un courant (I) pulsé et on forme, ainsi par aimantation des corps (8) d'aimant, les pôles (7) du rotor (2),
**caractérisé en ce que** l'on connecte entre eux électriquement les extrémités (10) du conducteur (9) ou des conducteurs (9) après la formation des pôles (7) du rotor (2).

2. Procédé de fabrication suivant la revendication 1, **caractérisé en ce que** l'on met autour de chaque pôle (7) à former respectivement son propre conducteur (9).

3. Procédé de fabrication suivant la revendication 1, **caractérisé en ce que** l'on met autour des pôles (7) à former un conducteur (9) continu.

4. Procédé de démontage d'une machine électrique tournante à excitation permanente,
- dans lequel la machine électrique a un rotor (2) ayant un corps (6) de rotor et un stator (1),
- dans lequel, dans le ou sur le corps (6) du rotor, on met en position et immobilise des corps (8) d'aimant en un matériau magnétisable, de manière à ce que les corps (8) d'aimant soient disposés dans la région des pôles (7) du rotor (2),
- dans lequel des conducteurs (9) électriques sont disposés autour des pôles (7) du rotor (2),
- dans lequel le corps (6) du rotor est fixé sur un arbre (3) du rotor,
- dans lequel on envoie aux conducteurs (9) électriques un courant (I) pulsé et on démagnétise ainsi les corps (8) d'aimant,
- dans lequel, seulement ensuite, on retire, de sa position de fonctionnement par rapport au stator (1), l'arbre (3) du rotor, y compris le corps (6) du rotor ayant les corps (8) d'aimant, qui maintenant ne sont plus magnétisés, et les conducteurs (9) électriques,
**caractérisé en ce que** l'on connecte électriquement entre elles les extrémités (10) du conducteur (9) ou des conducteurs (9) et on les sépare électriquement, avant l'envoi du courant (I) pulsé.
